# EUROPÄISCHE PATENTSCHRIFT

(11) **EP 3 714 164 B1**
(45) Veröffentlichungstag und Bekanntmachung des Hinweises auf die Patenterteilung: **22.09.2021**
(21) Anmeldenummer: 19700536.6
(22) Anmeldetag: 17.01.2019
(51) Int. Cl.: F04B 39/00, F04B 39/02, F16C 3/14

(54) **KURBELWELLE**
CRANKSHAFT
VILEBREQUIN

(30) Priorität: 19.01.2018 EP 18152541
(43) Veröffentlichungstag der Anmeldung: 30.09.2020
(73) Patentinhaber: Secop GmbH, 24939 Flensburg (DE)
(72) Erfinder: SCHÖLLAUF, Peter, 8010 Graz (AT); ZACH, Daniela, 8333 Riegersburg (AT)
(74) Vertreter: KLIMENT & HENHAPEL
(86) Internationale Anmeldenummer: PCT/EP2019/051170
(87) Internationale Veröffentlichungsnummer: WO 2019/141784

(56) Entgegenhaltungen:
- CH-A- 403 813
- CN-A- 103 899 634
- DE-A1-102008 025 322
- US-A- 5 842 420

## Beschreibung

### GEBIET DER ERFINDUNG

Die vorliegende Erfindung betrifft eine Kurbelwelle für einen Kältemittelkompressor, die Kurbelwelle zumindest umfassend ein zylinderförmiges Wellenelement, einen Kurbelzapfen zum Antreiben eines Verdichterkolbens des Kältemittelkompressors, sowie Mittel zum Fördern von Schmiermittel von einem unteren, dem Kurbelzapfen abgewandten Endbereich des Wellenelementes in Richtung des Kurbelzapfens, um bewegliche Teile des Kältemittelkompressors mit Schmiermittel zu versorgen.

### STAND DER TECHNIK

Kurbelwellen der eingangs beschriebenen Art kommen regelmäßig in Kompressoren, beispielsweise Kältemittelkompressoren, zum Einsatz. Dabei erfüllen sie zwei Aufgaben: einerseits dienen sie zur Übertragung von durch eine Antriebseinheit erzeugten Kräften auf einen Kompressionsmechanismus des Kompressors; zudem erfüllen sie die Aufgabe der Schmierung beweglicher Bauteile des Kompressors, wie etwa einer Zylinder-Kolben-Einheit und eines Pleuels des Kompressionsmechanismus sowie eines Lagers des Kompressors, in welchem die Kurbelwelle drehbar gelagert ist.

Schmiermittel, welches sich in einem Betriebszustand des Kompressors, in dem der Kompressor bestimmungsgemäß betrieben wird, im Kompressor befindet und in einem Bodenbereich eines Kompressorgehäuses einen Schmiermittelsumpf ausbildet, wird dabei über geeignete Mittel der rotierenden Kurbelwelle aus dem Schmiermittelsumpf in Richtung des Kompressionsmechanismus gefördert, gelangt in weiterer Folge über Austrittsöffnungen eines Wellenelementes der Kurbelwelle zu den zu schmierenden Stellen des Lagers und über einen Kurbelzapfen der Kurbelwelle zu den zu schmierenden Stellen des Kompressionsmechanismus. Anschließend tropft das geförderte Schmiermittel wieder von den geschmierten Bauteilen des Kompressors ab und gelangt - unter anderem auch über die Kurbelwelle - in den Schmiermittelsumpf zurück.

Durch die hohen Geschwindigkeiten, mit denen sich die Kurbelwelle dreht, sinkt der statische Druck des Schmiermittels im Bereich der Kurbelwelle stark ab, was wiederum zu einer niedrigeren Verdampfungstemperatur des Schmiermittels führt. Im Schmiermittel bilden sich deshalb Gasblasen aus, welche aufgrund der im Schmiermittel gelösten Gase vergleichsweise stabil sind (weiche oder stabile Gaskavitation). Diese Gasblasen können die Mittel zum Fördern von Schmiermittel in oder an der Kurbelwelle (beispielsweise Wendelnuten an einer Oberfläche des Wellenelementes oder Bohrungen im Inneren der Kurbelwelle) ganz oder teilweise verschließen. Dies wiederum führt zu Verschleiß der beweglichen Bauteile des Kompressors, da nicht mehr ausreichend viel Schmiermittel zu diesen zu schmierenden Bauteilen gefördert werden kann. Im Endeffekt erhöht die beschriebene Problematik die Ausfallsrate von Kompressoren.

Dokument CH403813A offenbart eine Kurbelwelle für einen Kältemittelverdichter gemäß der Präambel des Anspruchs 1.

### AUFGABE DER ERFINDUNG

Es ist daher eine Aufgabe dieser Erfindung, eine Kurbelwelle der eingangs beschriebenen Art bereitzustellen, durch die die Ausfallswahrscheinlichkeit eines Kompressors, in dem die Kurbelwelle zum Einsatz kommt, aufgrund von Kavitation des Schmiermittels reduziert werden kann.

### DARSTELLUNG DER ERFINDUNG

Diese Aufgabe wird bei einer erfindungsgemäßen Kurbelwelle für einen Kompressor, vorzugsweise für einen Kältemittelkompressor, die Kurbelwelle zumindest umfassend
- ein zylinderförmiges Wellenelement,
- einen Kurbelzapfen zum Antreiben eines Verdichterkolbens des Kältemittelkompressors, sowie
- Mittel zum Fördern von Schmiermittel von einem unteren, dem Kurbelzapfen abgewandten Endbereich des Wellenelementes in Richtung des Kurbelzapfens, um bewegliche Teile des Kältemittelkompressors mit Schmiermittel zu versorgen,
gelöst, indem zumindest ein Oberflächenabschnitt einer Oberfläche der Kurbelwelle zumindest einen Strömungsstörer aufweist, welcher Strömungsstörer aufgrund seiner Geometrie und/oder Beschaffenheit dazu eingerichtet ist, um Dampfblasen und/oder Gasblasen in dem die Kurbelwelle in einem Betriebszustand des Kältemittelkompressors umströmenden Schmiermittel zu zerstören.

Demnach weist die erfindungsgemäße Kurbelwelle zumindest einen, vorzugsweise mehrere, Strömungsstörer auf, um Dampf- und/oder Gasblasen, die sich im Schmiermittel durch Kavitation gebildet haben, kollabieren zu lassen. Dazu sind sämtliche Strömungsstörer an Oberflächenabschnitten der Oberfläche der Kurbelwelle angeordnet, welche Oberflächenabschnitte im Betriebszustand des Kompressors, in dem der Kompressor bestimmungsgemäß betrieben wird, von Schmiermittel um- oder durchströmt werden. Die Dampf- und/oder Gasblasen im Schmiermittel, welche sich im Schmiermittel durch Kavitation gebildet haben und im Folgenden der Einfachheit halber unter dem Begriff "Gasblasen" subsummiert werden, passieren somit zumindest einen Strömungsstörer, wenn das sie umgebende Schmiermittel durch die Mittel zum Fördern von Schmiermittel von dem Schmiermittelsumpf in Richtung des Kurbelzapfens geführt wird und/oder über die Kurbelwelle wieder in den Schmiermittelsumpf abläuft. Beim Passieren einer Strömungsstörers führt seine Geometrie und/oder seine (Oberflächen-)Beschaffenheit dazu, dass die passierende Gasblase derart stark deformiert bzw. gestört wird, dass sie kollabiert. Somit führt das erfindungsgemäße Vorsehen von Strömungsstörern an der Oberfläche der Kurbelwelle zu einer Reduktion der Wahrscheinlichkeit eines (zeitweisen) Verschlusses der Mittel zum Fördern von Schmiermittel der Kurbelwelle, was wiederum eine kontinuierliche Schmiermittelförderung und in der Folge auch eine ausreichende Schmierung der beweglichen Bauteile des Kompressors sicherstellt.

Bei einer bevorzugten Ausführungsform der erfindungsgemäßen Kurbelwelle ist es vorgesehen, dass ein Mittel zum Fördern von Schmiermittel durch eine schraubenförmige, die Längsachse des Wellenelementes umlaufende Fördernut des Wellenelementes ausgebildet ist, wobei die Fördernut Teil des Oberflächenabschnittes ist und den zumindest einen oder zumindest einen der Strömungsstörer aufweist.

Die als Wendelnut ausgebildete Fördernut dient dazu, das Schmiermittel über einen Großteil der Längserstreckung des Wellenelementes in Richtung des Kurbelzapfens, also in axialer Richtung entlang der Längsachse des Wellenelementes zu fördern. Dabei hat die Fördernut ihren Ursprung im unteren Endbereich des Wellenelementes und geht in einem oberen Endbereich des Wellenelementes, welcher einem zwischen dem Wellenelement und dem Kurbelzapfen angeordneten und zur Auswuchtung dienenden Übergangselement vorgelagert ist, in eine Durchtrittsöffnung der Kurbelwelle über, welche Durchtrittsöffnung den Durchtritt von Schmiermittel aus der Fördernut in den Kurbelzapfen ermöglicht. Die Anordnung eines oder mehrerer Strömungsstörer in der Fördernut ermöglicht es, dass die Anzahl von Gasblasen in dem mittels der Fördernut in Richtung des Kurbelzapfens transportierten Schmiermittel erheblich reduziert und die Gefahr einer Verstopfung der Fördernut und/oder der Durchtrittsöffnung durch solche Gasblasen minimiert wird.

Dabei ist es besonders bevorzugt vorgesehen, dass der zumindest eine oder zumindest einer der Strömungsstörer an einem Boden der Fördernut angeordnet ist. Alternativ oder zusätzlich dazu können Strömungsstörer auch an einer Wand der Fördernut angeordnet sein.

Je nach konkreter Realisierung der Strömungsstörer kann diese Anordnung der Strömungsstörer die Fertigung der erfindungsgemäßen Kurbelwelle erheblich vereinfachen.

Bei einer anderen bevorzugten Ausführungsform der erfindungsgemäßen Kurbelwelle ist es vorgesehen, dass ein Mittel zum Fördern von Schmiermittel durch eine, vorzugsweise exzentrisch angeordnete, besonders bevorzugt quer zur Längsachse des Wellenelementes verlaufende, Bohrung ausgebildet ist, wobei eine die Bohrung definierende Innenfläche der Bohrung Teil des Oberflächenabschnittes ist und zumindest einen Strömungsstörer aufweist. Es können also ein oder mehrere Strömungsstörer nur in der Bohrung angeordnet sein, oder es können ein oder mehrere Strömungsstörer zusätzlich an anderen Stellen angeordnet sein. Quer bedeutet in diesem Zusammenhang einen Winkel ungleich 0° oder 180° mit der Längsachse des Wellenelementes einschließend.

Üblicherweise wird Schmiermittel aus dem Schmiermittelsumpf über eine Bohrung im in den Schmiermittelsumpf ragenden Endbereich des Wellenelementes, die sogenannte Exzenterbohrung, zu einer ersten Austrittsöffnung des Wellenelementes gefördert. An dieser ersten Austrittsöffnung kann das austretende Schmiermittel zwecks weiterer Förderung Richtung Kurbelzapfen in die Fördernut übergeleitet werden und/oder zur Schmierung eines im Bereich der ersten Austrittsöffnung liegenden Lagers des Kompressors, in welchem die Kurbelwelle drehbar gelagert ist, genutzt werden. Die diese Bohrung definierende Innenfläche der Bohrung ist selbst Teil des Oberflächenabschnittes der Kurbelwelle und kann als solche einen oder mehrere Strömungsstörer aufweisen - wie es bei der zuletzt beschriebenen bevorzugten Ausführungsform der Fall ist. Dadurch wird sichergestellt, dass das aus dem Schmiermittelsumpf über die Bohrung in die Kurbelwelle eintretende Schmiermittel weitestgehend von Gasblasen befreit wird und weder die erste Austrittsöffnung noch die Fördernut durch Gasblasen verschlossen werden können.

Bei einer weiteren bevorzugten Ausführungsform der erfindungsgemäßen Kurbelwelle ist es vorgesehen, dass eine äußere Mantelfläche des Wellenelementes Teil des Oberflächenabschnittes ist und den zumindest einen oder zumindest einen der Strömungsstörer aufweist.

Ein beträchtlicher Anteil des zur Schmierung eines Kompressionsmechanismus - etwa des Verdichterkolbens , der sich in einem Zylinder zwischen zwei Totpunkten hin und her bewegt, und/oder eines Pleuels, welches die erforderliche Wirkverbindung zwischen dem Kurbelzapfen und dem Verdichterkolben vermittelt - geförderten Schmiermittels fließt wieder über die Kurbelwelle, genauer gesagt über die äußere Mantelfläche des Wellenelementes, ab, um schließlich in den Schmiermittelsumpf zurück zu gelangen. Wiederum kann es dazu kommen, dass aufgrund der hohen Rotationsgeschwindigkeit der Kurbelwelle Kavitation und dadurch Blasenbildung im Schmiermittel entsteht. Die dabei entstandenen Gasblasen würden dann mit dem abfließenden Schmiermittel in den Schmiermittelsumpf zurückkehren, sodass die Bohrung, nämlich die Exzenterbohrung, Gefahr läuft, teilweise blockiert oder sogar vollständig verstopft zu werden. In beiden Fällen wäre die Versorgung der zu schmierenden Bauteile des Kompressors mit einer ausreichenden Menge an Schmiermittel nicht mehr sichergestellt. Durch die Anordnung von Strömungsstörern an der äußeren Mantelfläche wird das ablaufende Schmiermittel von Gasblasen befreit, bevor es in den Schmiermittelsumpf zurückkehren kann und die Gasblasen die Gelegenheit haben, die Schmiermittelversorgung - also die Mittel zur Förderung von Schmiermittel - zu blockieren.

Bei einer besonders bevorzugten Ausführungsform der erfindungsgemäßen Kurbelwelle ist es vorgesehen, dass zumindest ein Strömungsstörer in einem Freistellungsabschnitt der äußeren Mantelfläche des Wellenelementes angeordnet ist, wobei das Wellenelement im Bereich des Freistellungsabschnittes einen geringeren Durchmesser aufweist als im Bereich eines zur Lagerung der Kurbelwelle im Kältemittelkompressor dienenden Lagerungsabschnittes des Wellenelementes und/oder des Endbereiches.

Es können also ein oder mehrere Strömungsstörer in dem Freistellungsabschnitt der äußeren Mantelfläche angeordnet sein, oder es können ein oder mehrere Strömungsstörer zusätzlich an anderen Stellen angeordnet sein. Strömungsstörer, die im Freistellungsabschnitt angeordnet sind, haben den Vorteil, dass ihre Geometrie und/oder ihre Oberflächenbeschaffenheit einer größeren gestalterischen Freiheit unterliegen als Strömungsstörer, die an einer anderen Stelle der äußeren Mantelfläche des Wellenelementes angeordnet sind. So können diese Strömungsstörer beispielsweise in höherem Maße in radiale Richtung von dem Wellenelement abragen und somit höher ausgebildet sein, als im Falle von Strömungsstörern, die etwa im Bereich des passgenau gefertigten Lagerungsabschnittes oder des Endbereiches des Wellenelementes. Zudem bieten im Freistellungsabschnitt angeordnete Strömungsstörer auch deshalb einen Vorteil, weil die Fördernut üblicherweise hauptsächlich im Freistellungsabschnitt abgeordnet ist. Dasjenige Schmiermittel, das nicht wieder in den Schmiermittelsumpf zurückkehrt sondern schon davor wieder in die Fördernut eingeleitet wird, um wiederum in Richtung des Kurbelzapfens gefördert zu werden, passiert bei dieser Ausführungsform der erfindungsgemäßen Kurbelwelle zuerst die im Freistellungsabschnitt angeordneten Strömungsstörer. Dadurch können etwaige im Schmiermittel vorhandene Gasblasen zerstört und die Fördernut wie auch die Durchtrittsöffnung vor Verschluss geschützt werden.

Gemäß einer weiteren besonders bevorzugten Ausführungsform der erfindungsgemäßen Kurbelwelle ist es vorgesehen, dass zumindest ein Strömungsstörer als eine Erhebung und/oder eine Vertiefung des Oberflächenabschnittes ausgebildet ist.

Es können also ein oder mehrere Strömungsstörer als eine Erhebung und/oder eine Vertiefung des Oberflächenabschnittes ausgebildet sein, oder es können ein oder mehrere Strömungsstörer zusätzlich in anderer Form ausgebildet sein.

Bei einer weiteren besonders bevorzugten Ausführungsform der erfindungsgemäßen Kurbelwelle ist es vorgesehen, dass der zumindest eine oder zumindest einer der Strömungsstörer durch eine Nut ausgebildet ist.

Diese Nut kann an dem Oberflächenabschnitt, beispielsweise innerhalb der Fördernut, an der Innenfläche der Bohrung, an der Innenseite der Durchtrittsöffnung, an der äußeren Mantelfläche des Wellenelementes und/oder in dem Freistellungsabschnitt der äußeren Mantelfläche des Wellenelementes (außerhalb der Fördernut), angeordnet sein und den zumindest einen oder einen der Strömungsstörer ausbilden. Durch Ausgestaltung der Nutform kann die Nut an die Erfordernisse des Betriebszustandes des Kompressors und/oder an das jeweils verwendete Schmiermittel angepasst werden. Dabei kann sich die Nut jeweils nur über einen Teil des jeweiligen Oberflächenabschnittes erstrecken, oder diesen größtenteils oder auch im Wesentlichen vollständig bedecken. Der Begriff Nut steht dabei stellvertretend für jedwede Form einer länglichen (zusammenhängenden oder auch unterbrochenen) Vertiefung an dem Oberflächenabschnitt der Oberfläche der Kurbelwelle.

Grundsätzlich kann die Nut beliebige Form und Ausbildung haben, solang eine ausreichende Störung der im Schmiermittel vorhandenen Gasblasen sichergestellt ist. Besonders vorteilhaft ist es jedoch, wenn, wie bei einer anderen bevorzugten Ausführungsform der erfindungsgemäßen Kurbelwelle vorgesehen, die Nut eine geringere Nuttiefe als die Fördernut aufweist.

Dadurch wird eine ausreichende Störung des Schmiermittelstroms sichergestellt, durch welche Störung Gasblasen im Schmiermittel, die durch Kavitation erzeugt wurden, zerstört werden.

Besondere Vorteile hinsichtlich einer einfacheren Fertigung der Kurbelwelle ergeben sich bei einer weiteren bevorzugten Ausführungsform dadurch, dass die Nut schraubenförmig ausgebildet ist und die Längsachse des Wellenelementes umläuft.

Somit ist auch die Nut als Wendelnut ausgebildet, wobei sich die Nut in Bezug auf Form, Nuttiefe und Ganghöhe von der Fördernut unterscheiden kann.

Bei einer bevorzugten Ausführungsform der erfindungsgemäßen Kurbelwelle ist es etwa vorgesehen, dass die Nut eine, vorzugsweise um mindestens einen Faktor 10, geringere Ganghöhe als die Fördernut aufweist.

Dadurch ist der jeweilige Oberflächenabschnitt derart deformiert, dass Gasblasen in dem die Kurbelwelle im Betriebszustand des Kompressors umströmenden Schmiermittel effizient zerstört werden.

Besonders bevorzugt ist bei einer weiteren Ausführungsform der erfindungsgemäßen Kurbelwelle vorgesehen, dass der zumindest eine oder zumindest einer der Strömungsstörer durch eine Riefe oder Rille, vorzugsweise jeweils eine Schar parallel zueinander angeordneter Riefen oder Rillen, ausgebildet ist.

Durch die Ausbildung des Strömungsstörers als Riefe oder Rille wird eine besonders einfache Fertigung des Strömungsstörers ermöglicht. Sämtliche Oberflächenabschnitte, an welchen Strömungsstörer angeordnet werden sollen, werden hierzu mit jeweils einer beliebig verlaufenden Riefe oder Rille versehen, wodurch die Oberflächenabschnitte jeweils im Fall einer Riefe mit einer Gestaltabweichung 4. Ordnung und im Fall einer Rille mit einer Gestaltabweichung 3. Ordnung (DIN 4760), und somit in beiden Fällen mit einer gewissen Oberflächenrauheit, versehen werden.

Besonders bevorzugt ist es, wenn der zumindest eine oder zumindest einer der Strömungsstörer durch jeweils eine Schar parallel zueinander angeordneter Riefen oder Rillen ausgebildet ist.

Eine entsprechende Störung der Schmiermittelströmung kann bei einer anderen besonders bevorzugten Ausführungsform der erfindungsgemäßen Kurbelwelle auch erreicht werden, indem zumindest einer der Strömungsstörer durch zumindest einen Klebepunkt und/oder Schweißpunkt, vorzugsweise eine Vielzahl an Klebepunkten und/oder Schweißpunkten, ausgebildet ist, welcher zumindest eine Klebepunkt und/oder Schweißpunkt von dem Oberflächenabschnitt der Kurbelwelle absteht.

Es können also ein oder mehrere Strömungsstörer durch zumindest einen Klebepunkt und/oder Schweißpunkt ausgebildet sein, oder es können ein oder mehrere Strömungsstörer zusätzlich in anderer Form ausgebildet sein. Diese Ausführungsform ist durch ein besonders hohes maß an Flexibilität hinsichtlich des Designs der Strömungsstörer ausgezeichnet. Sowohl die äußere Mantelfläche des Wellenelementes als auch der Freistellungsabschnitt und/oder die Innenfläche der Bohrung können mit entsprechenden Klebe- und/oder Schweißpunkten versehen sein, wobei die Ausbildung jedes einzelnen Klebe- oder Schweißpunktes verschieden sein kann. Dabei können die derart ausgebildeten Strömungsstörer auch größtenteils oder ausschließlich an Oberflächenabschnitten angeordnet werden, deren Beschaffenheit hinsichtlich der Stabilität der Schmiermittelströmung von besonderer Bedeutung ist.

Somit kann durch Platzierung einiger weniger Strömungsstörer an solchen kritischen Oberflächenabschnitten bereist der gewünschte Effekt erreicht werden - nämlich eine Zerstörung der meisten oder aller Gasblasen im die Kurbelwelle im Betriebszustand des Kompressors umströmenden Schmiermittel.

Die der Erfindung zugrunde liegende Aufgabe wird auch durch einen Kompressor, vorzugsweise einen Kältemittelkompressor, mit einer Kurbelwelle der oben beschriebenen Art gelöst.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine erfindungsgemäße Kurbelwelle
- Fig. 2: die Kurbelwelle aus Fig. 1 in einer Seitenansicht
- Fig. 3: die Kurbelwelle aus Fig. 1 in einer Aufsicht
- Fig. 4: eine erfindungsgemäße Kurbelwelle mit einem als Nut ausgebildeten Strömungsstörer
- Fig. 5: eine weitere erfindungsgemäße Kurbelwelle mit einem als Nut ausgebildeten Strömungsstörer
- Fig. 6: eine andere erfindungsgemäße Kurbelwelle mit als eine Schar von Rillen ausgebildeten Strömungsstörern

### WEGE ZUR AUSFÜHRUNG DER ERFINDUNG

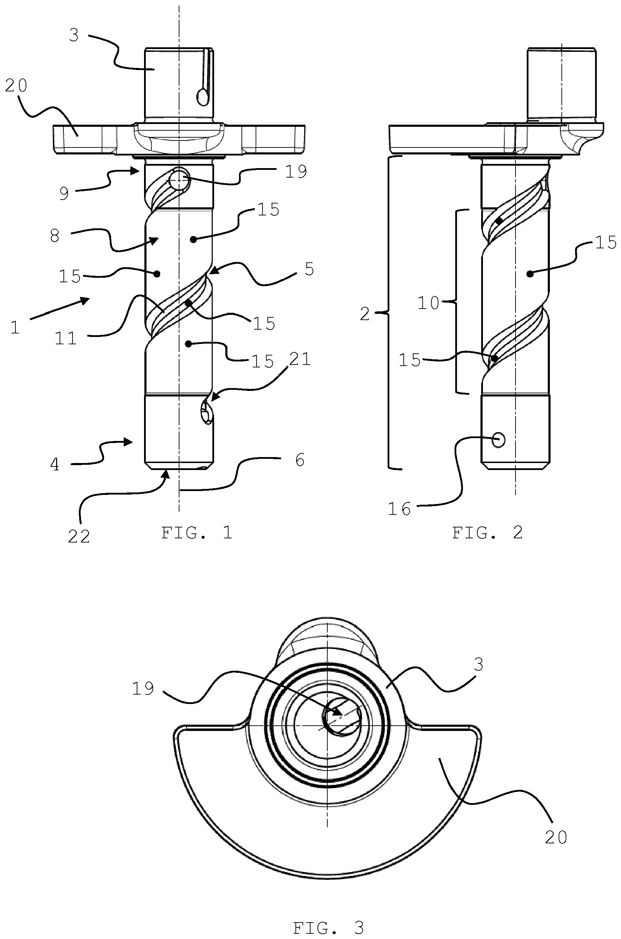

Die Figuren 1 bis 3 zeigen eine erfindungsgemäße Kurbelwelle 1 für einen Kompressor, vorzugsweise einen Kältemittelkompressor, mit einem zylinderförmigen Wellenelement 2, einem Kurbelzapfen 3 sowie mit einem zwischen dem Kurbelzapfen 3 und dem Wellenelement 2 angeordneten und zur Auswuchtung der Kurbelwelle 1 dienenden Übergangselement 20. Die Kurbelwelle 1 weist in Form einer Fördernut 5 Mittel zum Fördern von Schmiermittel auf, um Schmiermittel von einem unteren, einem Kurbelzapfen 3 abgewandten Endbereich 4 eines Wellenelementes 2 in Richtung des Kurbelzapfens 3 zu fördern.

Die Fördernut 5 ist als Wendelnut ausgebildet und umläuft eine Längsachse 6 des zylinderförmigen Wellenelementes 2. Dabei hat sie ihren Ursprung im Endbereich 4 des Wellenelementes 2, nämlich in einer Austrittsöffnung 21, und mündet in einem an das Übergangselement 20 angrenzenden Lagerungsabschnitt 9 des Wellenelementes 2 in eine Durchtrittsöffnung 19.

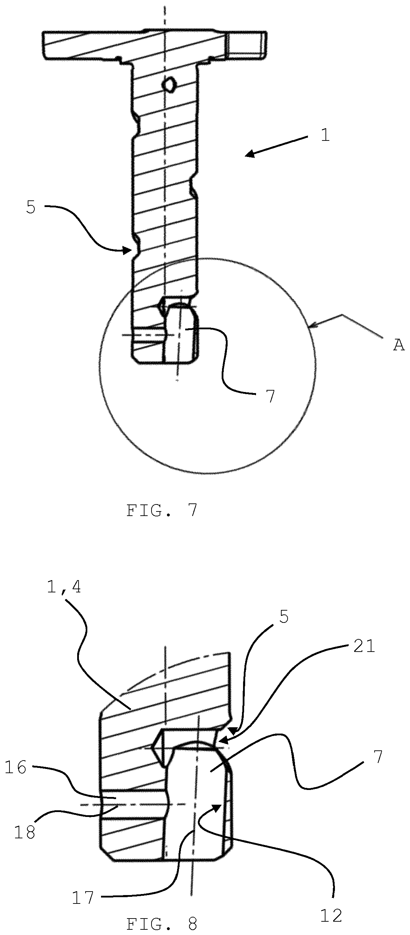

Die Austrittsöffnung 21 ermöglicht es, dass Schmiermittel, welches in einem Betriebszustand des Kältemittelkompressors aus einem Schmiermittelsumpf über eine (nicht dargestellte) Bohrung 7 - siehe Figuren 7 und 8 - in das Innere des Wellenelementes 2 gefördert wurde, das Wellenelement 2 verlassen und zwecks weiterer Förderung in Richtung des Kurbelzapfens 3 in die Fördernut 5 überschwappen kann. Zu diesem Zweck ist die Austrittsöffnung 21 mit der Bohrung 7 verbunden. Bei der Bohrung 7 selbst handelt es sich vorzugsweise um eine quer zur Längsachse 6 des Wellenelementes 2 verlaufende Exzenterbohrung, die sich im Wellenelement 2 von einer unteren Grundfläche 22 des Wellenelementes 2 erstreckt. Dabei schließt eine Längsachse 17 der Bohrung 7 in dem gezeigten Ausführungsbeispiel einen Winkel von etwa 10° mit der Längsachse 6 des Wellenelementes 2 ein. Im Betriebszustand des Kältemittelkompressors ragt die Kurbelwelle 1 mit ihrem Endbereich 4, zumindest aber mit der Grundfläche 22 in den Schmiermittelsumpf hinein, sodass durch die Rotation der Kurbelwelle 1 Schmiermittel über die Bohrung 7 zu der Austrittsöffnung 21 gefördert wird.

Aus Fig. 2, 7 und 8 ist ersichtlich, dass die Kurbelwelle 1 im Endbereich 4 des Wellenelementes 2 eine weitere Bohrung 16 aufweist, welche eine Schmiermittelversorgung eines Lagers des Kältemittelkompressors, in welchem die Kurbelwelle 1 mittels des Endbereiches 4 drehbar gelagert ist, ermöglicht. Eine Längsachse 18 der weiteren Bohrung 16 verläuft dabei im Wesentlichen orthogonal zu der Längsachse 6 des Wellenelementes 2.

Über die Durchtrittsöffnung 19, in die die Fördernut 5 mündet, gelangt das Schmiermittel schlussendlich in den Kurbelzapfen 3, welcher üblicherweise als Hohlzylinder ausgebildet und somit nach oben hin offen ist (siehe Figur 3). Das geförderte Schmiermittel kann die Kurbelwelle 1 über den Kurbelzapfen 3 verlassen und die beweglichen Bauteile des Kompressionsmechanismus, beispielsweise einen Verdichterkolben, oder ein Lager des Kältemittelkompressors, in welchem die Kurbelwelle 1 mittels des Lagerungsabschnittes 9 drehbar gelagert ist, schmieren.

In weiterer Folge läuft das Schmiermittel von dem Kompressionsmechanismus bzw. von den beweglichen Bauteilen des Kältemittelkompressors ab und kehrt in den Schmiermittelsumpf zurück, wo es zur neuerlichen Förderung in Richtung des Kurbelzapfens 3 zur Verfügung steht. Ein Teil des Schmiermittels läuft dabei über eine Innenseite eines Kompressorgehäuses ab; ein anderer Teil über die Kurbelwelle 1, genauer gesagt über eine Oberfläche der Kurbelwelle 1. Der Begriff "Oberfläche" bezeichnet die Gesamtheit aller Begrenzungsflächen der Kurbelwelle 1. Insbesondere kann das Schmiermittel über eine äußere Mantelfläche 8 des Wellenelementes 2 oder über Innenflächen 12 der Bohrung 7 oder der Durchtrittsöffnung 19 an der Kurbelwelle 1 ablaufen.

Durch die hohe Rotationsgeschwindigkeit der Kurbelwelle 1 im Betriebszustand des Kältemittelkompressors 1 kommt es besonders in der Grenzschicht zwischen der Oberfläche der Kurbelwelle 1 und dem Schmiermittel zu einem erheblichen Absinken des statischen Drucks im Schmiermittel, was wiederum mit einer stark verminderten Verdampfungstemperatur des Schmiermittels führt. Dadurch reicht die im Betriebszustand des Kältemittelkompressors im Gehäuseinneren vorherrschende Betriebstemperatur bereits aus, um Teile des Schmiermittels im Bereich der Grenzschicht zu verdampfen, sodass Gasblasen im Schmiermittel entstehen können. Dieses Phänomen wird als Kavitation bezeichnet und kann dazu führen, dass die Bauteile des Kältemittelkompressors durch die Implosion der entstandenen Gasblasen beschädigt werden. Im Zusammenhang mit Kompressoren können solche Gasblasen zu einem Versiegen der Schmiermittelversorgung der zu schmierenden beweglichen Bauteile des Kompressors führen, da die entstandenen Gasblasen die Mittel zur Förderung von Schmiermittel teilweise oder auch vollständig blockieren können.

Um der oben beschriebenen Blasenbildung entgegen zu wirken und um bereits entstandene Gasblasen zu destabilisieren und zum Kollabieren zu bringen, ist es erfindungsgemäß vorgesehen, dass zumindest ein Oberflächenabschnitt der Oberfläche der Kurbelwelle 1 zumindest einen Strömungsstörer aufweist. Die Geometrie und/oder die Beschaffenheit des Strömungsstörers führen - im Zusammenspiel mit einer entsprechenden Positionierung des zumindest einen oder zumindest eines der Strömungsstörer - dazu, dass die Gasblasen in dem die Kurbelwelle 1 umströmenden Schmiermittel destabilisiert und zerstört werden.

Beispielsweise können die Strömungsstörer durch Klebepunkte 15 im Inneren der Fördernut 5, nämlich an einem Boden 11 und/oder einer Wand der Fördernut 5, realisiert sein (siehe Figuren 1 und 2). Dadurch wird Schmiermittel, das in die Fördernut 5 eintritt, auf zuverlässige Weise von Gasblasen befreit. Eine Verstopfung der Fördernut 5 selbst oder der Durchtrittsöffnung 19 durch Gasblasen kann somit vermieden werden. Ebenso kann die Anordnung der Klebepunkte 15 an der Innenfläche 12 der Bohrung 7 vorgesehen sein, um das Schmiermittel bereits beim Einströmen in die Kurbelwelle 1 von etwaigen Gasblasen zu befreien.

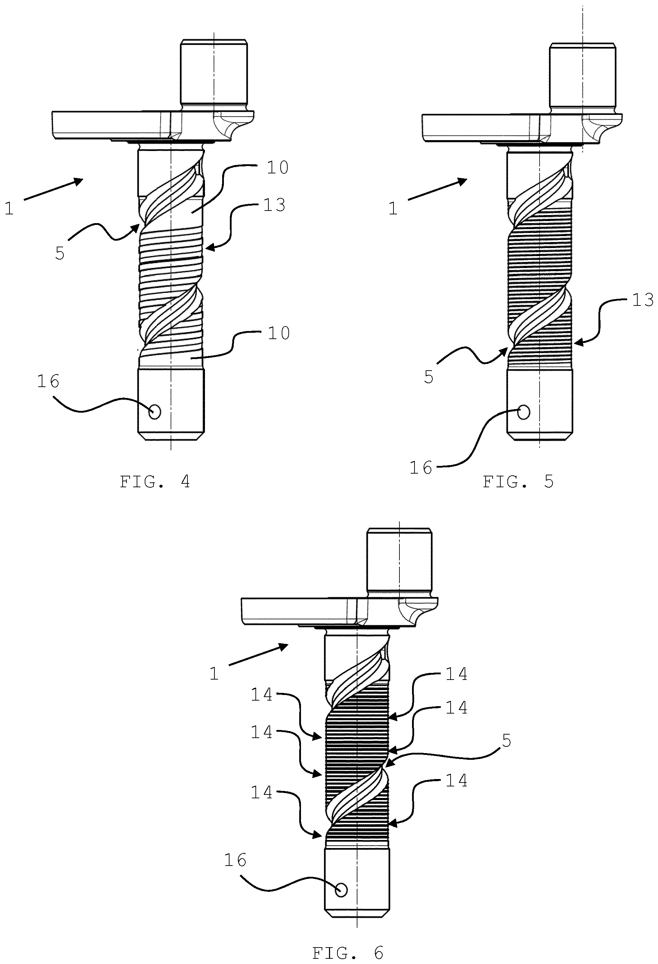

Der zumindest eine oder zumindest einer der Strömungsstörer kann aber auch durch eine zusätzliche Nut 13 ausgebildet sein, welche Nut 13 an der äußeren Mantelfläche 8 des Wellenelementes 2 angeordnet ist. Insbesondere kann die Nut 13 in einem Freistellungsabschnitt 10 des Wellenelementes 2 angeordnet sein, wobei sich der Freistellungsabschnitt 10 zwischen dem Endbereich 4 und dem Lagerungsabschnitt 9 des Wellenelementes 2 erstreckt und einen geringfügig verminderten Durchmesser als der Lagerungsabschnitt 9 und/oder der Endbereich 4 aufweist. Ausführungsvarianten der erfindungsgemäßen Kurbelwelle 1 mit einer im Freistellungsabschnitt 10 angeordneten und als Strömungsstörer fungierenden Nut 13 sind in den Figuren 4 und 5 dargestellt.

Der zumindest eine oder zumindest einer der Strömungsstörer kann auch durch Rillen 14 oder Riefen, oder wie in dem in Figur 6 dargestellten Ausführungsbeispiel durch eine Schar parallel zueinander verlaufender Rillen 14, ausgebildet sein, welche an dem äußeren Mantel, insbesondere dem Freistellungsabschnitt 10, des Wellenelementes 2 angeordnet sind. Dadurch wird dem Wellenelement 2 eine Oberflächenrauheit verliehen, welche dazu führt, dass Gasblasen im umströmenden Schmiermittel zerstört werden.

Selbstverständlich sind auch solche Kurbelwellen 1 vom Erfindungsgedanken mitumfasst, bei denen die Nut 13 und/oder die Riefen oder Rillen 14 an anderen Oberflächenabschnitten angeordnet sind, etwa an der Innenfläche 12 der Bohrung 7 oder der Durchtrittsöffnung 19.

Figur 7 zeigt eine erfindungsgemäße Kurbelwelle 1 in einer Schnittansicht, in der die Bohrung 7 zu sehen ist.

Figur 8 zeigt Detail A aus Fig. 7. Dabei sind die im Endbereich 4 des Wellenelementes 2 angeordnete Bohrung 7, die weitere Bohrung 16, sowie das Einströmen von Schmiermittel in die Fördernut 5 ermöglichende Austrittsöffnung 21 zu sehen.

### BEZUGSZEICHENLISTE

- 1: Kurbelwelle
- 2: Wellenelement
- 3: Kurbelzapfen
- 4: Endbereich
- 5: Fördernut
- 6: Längsachse
- 7: Bohrung
- 8: äußere Mantelfläche
- 9: Lagerungsabschnitt
- 10: Freistellungabschnitt
- 11: Boden der Fördernut
- 12: Innenfläche der Bohrung
- 13: Nut
- 14: Rille
- 15: Klebepunkt
- 16: weitere Bohrung
- 17: Längsachse der Bohrung
- 18: Längsachse der weiteren Bohrung
- 19: Durchtrittsöffnung
- 20: Übergangselement
- 21: Austrittsöffnung
- 22: Grundfläche

## Patentansprüche

1. Kurbelwelle (1) für einen Kältemittelkompressor, die Kurbelwelle (1) zumindest umfassend
- ein zylinderförmiges Wellenelement (2),
- einen Kurbelzapfen (3) zum Antreiben eines Verdichterkolbens des Kältemittelkompressors, sowie
- Mittel zum Fördern von Schmiermittel von einem unteren, dem Kurbelzapfen (3) abgewandten Endbereich (4) des Wellenelementes (2) in Richtung des Kurbelzapfens (3), um bewegliche Teile des Kältemittelkompressors mit Schmiermittel zu versorgen,
**dadurch gekennzeichnet, dass** zumindest ein Oberflächenabschnitt einer Oberfläche der Kurbelwelle (1) zumindest einen Strömungsstörer aufweist, welcher Strömungsstörer aufgrund seiner Geometrie und/oder Beschaffenheit dazu eingerichtet ist, um Dampfblasen und/oder Gasblasen in dem die Kurbelwelle (1) in einem Betriebszustand des Kältemittelkompressors umströmenden Schmiermittel zu zerstören.

2. Kurbelwelle (1) nach Anspruch 1, **dadurch gekennzeichnet, dass** ein Mittel zum Fördern von Schmiermittel durch eine schraubenförmige, die Längsachse (6) des Wellenelementes (2) umlaufende Fördernut (5) des Wellenelementes (2) ausgebildet ist, wobei die Fördernut (5) Teil des Oberflächenabschnittes ist und zumindest einen Strömungsstörer aufweist.

3. Kurbelwelle (1) nach Anspruch 2, **dadurch gekennzeichnet, dass** zumindest ein Strömungsstörer an einem Boden (11) der Fördernut (5) und/oder an einer Wand der Fördernut (5) angeordnet ist.

4. Kurbelwelle (1) nach einem der Ansprüche 1 bis 3, **dadurch gekennzeichnet, dass** ein Mittel zum Fördern von Schmiermittel durch eine, vorzugsweise exzentrisch angeordnete, besonders bevorzugt quer zur Längsachse (6) des Wellenelementes (2) verlaufende, Bohrung (7) ausgebildet ist, wobei eine die Bohrung (7) definierende Innenfläche (12) der Bohrung (7) Teil des Oberflächenabschnittes ist und zumindest einen Strömungsstörer aufweist.

5. Kurbelwelle (1) nach einem der Ansprüche 1 bis 4, **dadurch gekennzeichnet, dass** eine äußere Mantelfläche (8) des Wellenelementes (2) Teil des Oberflächenabschnittes ist und zumindest einen Strömungsstörer aufweist.

6. Kurbelwelle (1) nach Anspruch 5, **dadurch gekennzeichnet, dass** zumindest ein Strömungsstörer in einem Freistellungsabschnitt (10) der äußeren Mantelfläche (8) des Wellenelementes (2) angeordnet ist, wobei das Wellenelement (2) im Bereich des Freistellungsabschnittes (10) einen geringeren Durchmesser aufweist als im Bereich eines zur Lagerung der Kurbelwelle (1) im Kältemittelkompressor dienenden Lagerungsabschnittes (9) des Wellenelementes (2) und/oder des Endbereiches (4).

7. Kurbelwelle (1) nach einem der Ansprüche 1 bis 6, **dadurch gekennzeichnet, dass** zumindest ein Strömungsstörer als eine Erhebung und/oder eine Vertiefung des Oberflächenabschnittes ausgebildet ist.

8. Kurbelwelle (1) nach einem der Ansprüche 1 bis 7, **dadurch gekennzeichnet, dass** zumindest einer der Strömungsstörer durch eine Nut (13) ausgebildet ist.

9. Kurbelwelle (1) nach Anspruch 8, sofern abhängig von Anspruch 2 oder 3, **dadurch gekennzeichnet, dass** die Nut (13) eine geringere Nuttiefe als die Fördernut (5) aufweist.

10. Kurbelwelle (1) nach einem der Ansprüche 8 oder 9, **dadurch gekennzeichnet, dass** die Nut (13) schraubenförmig ausgebildet ist und die Längsachse (6) des Wellenelementes (2) umläuft.

11. Kurbelwelle (1) nach Anspruch 10, sofern abhängig von Anspruch 2 oder 3, **dadurch gekennzeichnet, dass** die Nut (13) eine, vorzugsweise um mindestens einen Faktor 10, geringere Ganghöhe als die Fördernut (5) aufweist.

12. Kurbelwelle (1) nach einem der Ansprüche 1 bis 11, **dadurch gekennzeichnet, dass** zumindest einer der Strömungsstörer durch eine Riefe oder Rille (14), vorzugsweise jeweils eine Schar parallel zueinander angeordneter Riefen oder Rillen (14), ausgebildet ist.

13. Kurbelwelle (1) nach einem der Ansprüche 1 bis 12, **dadurch gekennzeichnet, dass** zumindest ein Strömungsstörer durch zumindest einen Klebepunkt (15) und/oder Schweißpunkt, vorzugsweise eine Vielzahl an Klebepunkten (15) und/oder Schweißpunkten, ausgebildet ist, welcher zumindest eine Klebepunkt (15) und/oder Schweißpunkt von dem Oberflächenabschnitt der Kurbelwelle (1) absteht.

14. Kompressor, vorzugsweise Kältemittelkompressor, mit einer Kurbelwelle (1) nach einem der vorhergehenden Ansprüche.

## Claims

1. Crankshaft (1) for a refrigerant compressor, the crankshaft (1) comprising at least
- a cylindrical shaft element (2),
- a crankpin (3) for driving a compressor piston of the refrigerant compressor, and
- means for conveying lubricant from a lower end region (4) of the shaft element (2) facing away from the crankpin (3) in the direction toward the crankpin (3) to supply lubricant to movable parts of the refrigerant compressor,
**characterized in that** at least a surface section of a surface of the crankshaft (1) comprises at least one flow disruptor, which flow disruptor is adapted due to its geometry and/or texture to destroy vapor bubbles and/or gas bubbles in the lubricant flowing around the crankshaft (1) in an operating state of the refrigerant compressor.

2. Crankshaft (1) according to claim 1, **characterized in that** a means for conveying lubricant is formed by a helical conveying groove (5) of the shaft element (2) surrounding the longitudinal axis (6) of the shaft element (2), wherein the conveying groove (5) is part of the surface section and comprises at least one flow disruptor.

3. Crankshaft (1) according to claim 2, **characterized in that** at least one flow disruptor is arranged on a bottom (11) of the conveying groove (5) and/or on a wall of the conveying groove (5).

4. Crankshaft (1) according to one of claims 1 to 3, **characterized in that** a means for conveying lubricant is formed by a bore (7), preferably arranged eccentrically and particularly preferably extending transversely to the longitudinal axis (6) of the shaft element (2), wherein an inner surface (12) of the bore (7) defining the bore (7) is part of the surface section and comprises at least one flow disruptor.

5. Crankshaft (1) according to one of the claims 1 to 4, **characterized in that** an outer circumferential surface (8) of the shaft element (2) is part of the surface section and has at least one flow disruptor.

6. Crankshaft (1) according to claim 5, **characterized in that** at least one flow disruptor is arranged in an exposed section (10) of the outer circumferential surface (8) of the shaft element (2), wherein the shaft element (2) has a smaller diameter in the region of the exposed section (10) than in the region of a bearing section (9) of the shaft element (2) serving for the mounting of the crankshaft (1) in the refrigerant compressor and/or of the end region (4).

7. Crankshaft (1) according to one of claims 1 to 6, **characterized in that** at least one flow disruptor is formed as an elevation and/or a recess of the surface section.

8. Crankshaft (1) according to one of claims 1 to 7, **characterized in that** at least one of the flow disruptors is formed by a groove (13).

9. Crankshaft (1) according to claim 8, insofar as dependent on claim 2 or 3, **characterized in that** the groove (13) has a smaller groove depth than the conveying groove (5).

10. Crankshaft (1) according to one of the claims 8 or 9, **characterized in that** the groove (13) is of helical design and extends around the longitudinal axis (6) of the shaft element (2).

11. Crankshaft (1) according to claim 10, insofar as dependent on claim 2 or 3, **characterized in that** the groove (13) has a pitch which is lower than the conveying groove (5), preferably by at least a factor of 10.

12. Crankshaft (1) according to one of claims 1 to 11, **characterized in that** at least one of the flow disruptors is formed by a flute or groove (14), preferably in each case an array of flutes or grooves (14) arranged parallel to one another.

13. Crankshaft (1) according to one of claims 1 to 12, **characterized in that** at least one flow disruptor is formed by at least one glue spot (15) and/or weld spot, preferably a plurality of glue spots (15) and/or weld spots, which at least one glue spot (15) and/or weld spot protrudes from the surface section of the crankshaft (1).

14. Compressor, preferably refrigerant compressor, having a crankshaft according to one of the preceding claims.

## Revendications

1. Vilebrequin (1) pour un compresseur de réfrigérant, lequel vilebrequin (1) comprend au moins
- un élément d'arbre (2) cylindrique,
- un maneton de vilebrequin (3) destiné à entraîner un piston de compression du compresseur de réfrigérant, et
- des moyens pour acheminer du lubrifiant d'une partie d'extrémité inférieure (4) de l'élément d'arbre (2) tournée du côté du maneton de vilebrequin (3) vers le maneton de vilebrequin (3) afin d'alimenter les pièces en mouvement du compresseur de réfrigérant en lubrifiant,
**caractérisé en ce qu'**au moins une section d'une surface du vilebrequin (1) présente au moins un déflecteur d'écoulement, lequel déflecteur d'écoulement a une géométrie et/ou une structure conçues pour éliminer les bulles de vapeur et/ou d'air dans le lubrifiant parcourant le vilebrequin (1) dans un état de fonctionnement du compresseur de réfrigérant.

2. Vilebrequin (1) selon la revendication 1, **caractérisé en ce qu'**est prévu un moyen pour acheminer du lubrifiant à travers une gorge d'acheminement (5) hélicoïdale de l'élément d'arbre (2) qui s'enroule autour de l'axe longitudinal (6), laquelle gorge d'acheminement (5) fait partie de la section de surface et présente au moins un déflecteur d'écoulement.

3. Vilebrequin (1) selon la revendication 2, **caractérisé en ce qu'**au moins un déflecteur d'écoulement est disposé sur un fond (11) de la gorge d'acheminement (5) et/ou sur une paroi de la gorge d'acheminement (5).

4. Vilebrequin (1) selon l'une des revendications 1 à 3, **caractérisé en ce qu'**est prévu un moyen pour acheminer du lubrifiant à travers un alésage (7) disposé de préférence de façon excentrée et en particulier transversalement par rapport à l'axe longitudinal (6) de l'élément d'arbre (2), une surface intérieure (12) de l'alésage (7) qui définit l'alésage (7) faisant partie de la partie de section de surface et présentant au moins un déflecteur d'écoulement.

5. Vilebrequin (1) selon l'une des revendications 1 à 4, **caractérisé en ce qu'**une surface d'enveloppe extérieure (8) de l'élément d'arbre (2) fait partie de la section de surface et présente au moins un déflecteur d'écoulement.

6. Vilebrequin (1) selon la revendication 5, **caractérisé en ce qu'**au moins un déflecteur d'écoulement est disposé dans une section de dégagement (10) de la surface d'enveloppe extérieure (8) de l'élément d'arbre (2), lequel élément d'arbre (2) présente un plus petit diamètre au niveau de la section de dégagement (10) qu'au niveau d'une section d'appui (9) de l'élément d'arbre (2) et/ou de la partie d'extrémité (4) servant à l'appui du vilebrequin (1) dans le compresseur de réfrigérant.

7. Vilebrequin (1) selon l'une des revendications 1 à 6, **caractérisé en ce qu'**au moins un déflecteur d'écoulement est conformé comme une saillie et/ou un creux de la section de surface.

8. Vilebrequin (1) selon l'une des revendications 1 à 7, **caractérisé en ce qu'**au moins un des déflecteurs d'écoulement est formé par une gorge (13).

9. Vilebrequin (1) selon la revendication 8 dépendante de la revendication 2 ou 3, **caractérisé en ce que** la gorge (13) a une moins grande profondeur que la gorge d'acheminement (5).

10. Vilebrequin (1) selon l'une des revendications 8 ou 9, **caractérisé en ce que** la gorge (13) a une forme hélicoïdale et s'enroule autour de l'axe longitudinal (6) de l'élément d'arbre (2).

11. Vilebrequin (1) selon la revendication 10 dépendante de la revendication 2 ou 3, **caractérisé en ce que** la gorge (13) a un pas de spirale plus petit, de préférence d'un facteur 10, que la gorge d'acheminement (5).

12. Vilebrequin (1) selon l'une des revendications 1 à 11, **caractérisé en ce qu'**au moins un des déflecteurs d'écoulement est formé par une strie ou une rainure (14), de préférence un groupe de stries ou de rainures (14) disposées parallèlement.

13. Vilebrequin (1) selon l'une des revendications 1 à 12, **caractérisé en ce qu'**au moins un déflecteur d'écoulement est formé par au moins un point de collage (15) et/ou un point de soudure, de préférence plusieurs points de collage (15) et/ou points de soudure, lequel au moins un point de collage (15) et/ou point de soudure dépasse de la section de surface du vilebrequin (1).

14. Compresseur, de préférence compresseur de réfrigérant, avec un vilebrequin (1) selon l'une des revendications précédentes.
